# EUROPEAN PATENT SPECIFICATION

(11) **EP 2 224 732 B1**
(45) Date of publication and mention of the grant of the patent: **09.05.2012**
(21) Application number: 10154773.5
(22) Date of filing: 26.02.2010
(51) Int. Cl.: H04N 5/60

(54) **Video device**
Videovorrichtung
Dispositif vidéo

(30) Priority: 26.02.2009 JP 2009043755
(43) Date of publication of application: 01.09.2010
(73) Proprietor: Funai Electric Co., Ltd., Nakagaito Daito-shi Osaka 574-0013 (JP)
(72) Inventor: Matsunaga, Junichi, Daito-shi Osaka 574-0013 (JP); Honda, Takahisa, Daito-shi Osaka 574-0013 (JP); Yamamoto, Manabu, Daito-shi Osaka 574-0013 (JP)
(74) Representative: Grünecker, Kinkeldey, Stockmair & Schwanhäusser

(56) References cited:
- KR-A- 20060 133 137
- US-A1- 2004 085 297

## Description

### CROSS-REFERENCE TO RELATED APPLICATIONS

This application claims priority to Japanese Patent Application No. 2009-043755 filed on February 26,2009.

### BACKGROUND

### Field of the Invention

The present invention generally relates to a video device. More specifically, the present invention relates to a video device that receives digital broadcasts. Background Information

Advances in digital technology in recent years have led to digital conversion in the field of broadcasting as well. For example, digital broadcasts have been practical in such areas as digital terrestrial television broadening, BS (broadcast satellite) digital broadcasting, CS (communications satellite) digital broadcasting, and so forth. With such digital broadcasting, video, audio, data, and other such individual streams are handled by a common signal format, and a transport stream (TS) of multiplexed signals is sent to a video device compatible with the digital broadcasting.

In Europe there are many countries that border on multiple neighboring countries, so digital broadcast programs that are broadcast by each of these countries (hereinafter referred to as "television programs") includes one video and a plurality of audio tracks, for example. Accordingly, the audio stream of the transmitted TS is made up of a plurality of sets (or tracks) of audio data made for different languages. Also, this audio stream includes audio data for the visually impaired. As a result, when a visually impaired person views a television program, if audio data for the visually impaired is preselected, for example, the user can listen to the audio that describes the scene in addition to the normal audio. Thus, the user can understand the television program.

Audio for the visually impaired is usually necessary when a visually impaired person views a television program, but video is often unnecessary. However, with a conventional video device, the video is displayed during viewing of the television program regardless of who the viewer is. This meant that, in the case of a liquid crystal television, for example, power consumption by the backlight is wasted. Furthermore, conventional technologies related to video and audio muting are well known (see Japanese Laid-Open Patent Application Publications Nos. 2007-089146, 2006-054613, 2006-033677, and 2005-020725, for example), but do not disclose a solution to the above problem.

### SUMMARY

The present invention was conceived in light of the above-mentioned problems. One object of the present invention is to provide a video device with which power consumption can be reduced when a visually impaired person views television programs.

In accordance with one aspect of the present invention, there is provided a video device in accordance with claim 1.

With this video device, it is possible to provide a video device with which power consumption can be reduced when a visually impaired person views television programs.

### BRIEF DESCRIPTION OF THE DRAWINGS

Referring now to the attached drawings which form a part of this original disclosure:

FIG. 1 is a block diagram of a television receiver in accordance with one embodiment;

FIG. 2 is a diagram illustrating a service description table stored in a temporary memory of the television receiver illustrated in FIG. 1;

FIG. 3 is a diagram illustrating an event information table stored in the temporary memory;

FIG. 4 is a flowchart illustrating an operation of the television receiver illustrated in FIG. 1;

FIG. 5 is a detail diagram illustrating descriptors stored in the temporary memory;

FIG. 6 is a data table stored in the temporary memory; and

FIG. 7 is a diagram illustrating an OSD (on screen display) displayed on a display component of the television receiver illustrated in FIG. 1.

### DETAILED DESCRIPTION OF EMBODIMENTS

A preferred embodiment will now be explained with reference to the drawings. It will be apparent to those skilled in the art from this disclosure that the following descriptions of the preferred embodiment are provided for illustration only and not for the purpose of limiting the invention as defined by the appended claims and their equivalents.

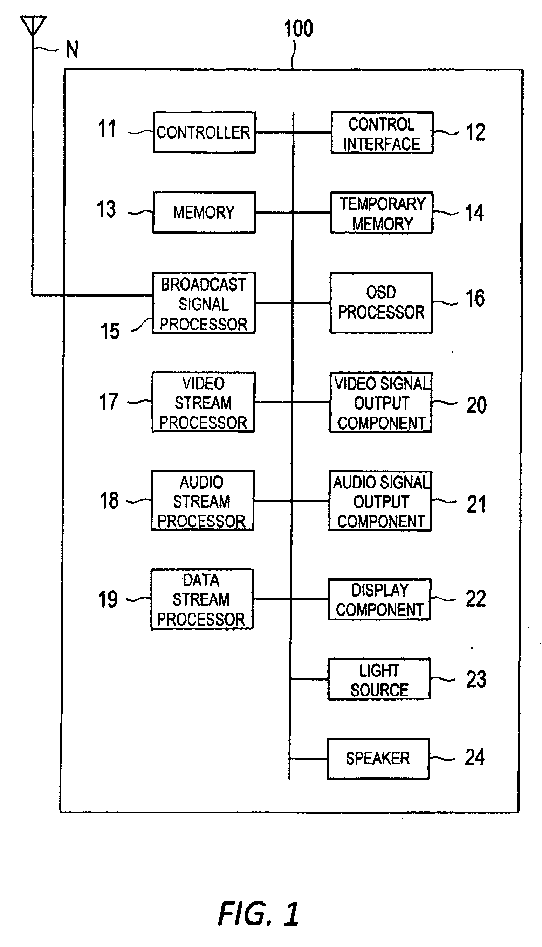

FIG. 1 is a block diagram of a television receiver (e.g., video device) (hereinafter referred to as TV) 100. The TV 100 includes a controller 11, a control interface 12, a memory 13, a temporary memory 14, a broadcast signal processor 15, an OSD (on screen display) processor 16, a video stream processor 17, an audio stream processor 18, a data stream processor 19, a video signal output component 20, an audio signal output component 21, a display component 22, a light source 23, and a speaker 24. The controller 11 includes CPU (central processing unit), for example, and controls the various components of the TV 100.

The control interface 12 includes a light receiver (not shown) that receives operation commands sent from a remote control device, or a button component (not shown) provided to a front panel of the TV 100. The TV 100 executes specific operations according to the operation (e.g., operation input) of the control interface 12.

The memory 13 includes a flash ROM (read only memory), a hard disk, or the like. Various kinds of software, such as application software, are stored in the memory 13. The temporary memory 14 includes a RAM (random access memory), for example, and stores data needed for computation processing and control processing by the controller 11.

The broadcast signal processor 15 includes a tuner, a demultiplexer, or the like, and converts digital broadcast signals received by an antenna N into a transport stream (TS), and then separates this TS into individual streams having a video stream, an audio stream, and a data stream. After this separation, the video stream is outputted to the video stream processor 17, the audio stream is outputted to the audio stream processor 18, and the data stream is outputted to the data stream processor 19.

The OSD processor 16 produces OSD data for displaying images, characters, or various other kinds of data on the display component 22, and outputs this data to the video signal output component 20.

The video stream processor 17 subjects the inputted video stream to image processing or other specific processing, and converts the video stream that has undergone this processing into a video signal. Furthermore, the video stream processor 17 outputs the video signal to the video signal output component 20.

The audio stream processor 18 subjects the inputted audio stream to audio processing or other specific processing, and converts the audio stream that has undergone this processing into an audio signal. Furthermore, the audio stream processor 18 outputs the audio signal to the audio signal output component 21.

The data stream processor 19 subjects the inputted data stream to data processing or other specific processing, thereby extracting various kinds of data included in the data stream. Furthermore, the data stream processor 19 outputs the extracted data to the temporary memory 14.

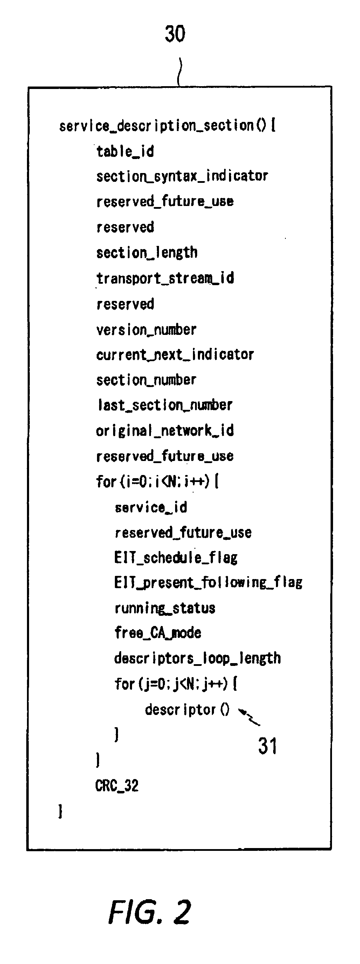

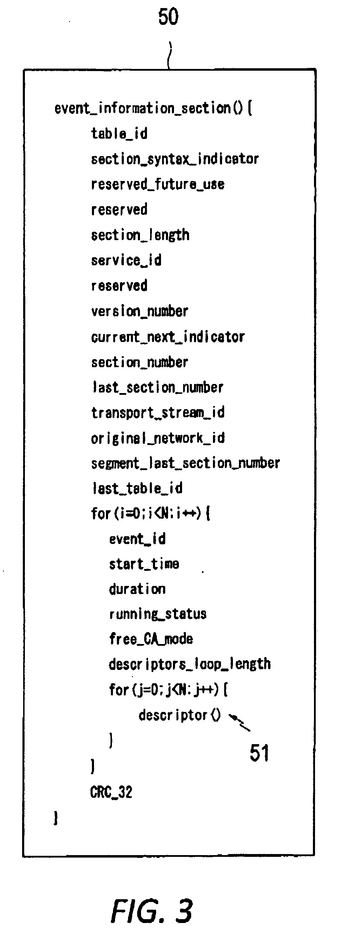

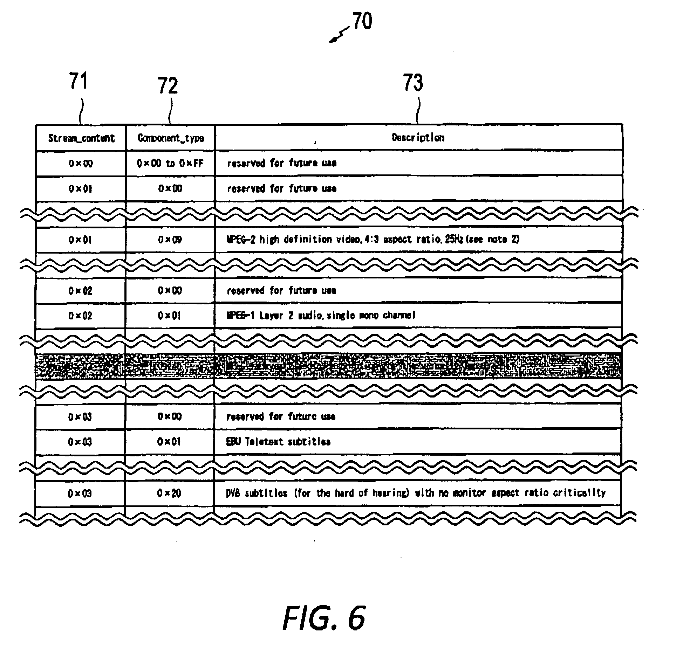

The data outputted from the data stream processor 19 to the temporary memory 14 here includes a service description table (SDT) 30 illustrated in FIG. 2, an event information table (EIT) 50 illustrated in FIG. 3, and a data table 70 illustrated in FIG. 6.

More specifically, the SDT 30 illustrated in FIG. 2 includes a plurality of descriptors that represent information such as the "channel name" or "broadcast company name" related to the tuned television program. Furthermore, the EIT 50 illustrated in FIG. 3 includes a plurality of descriptors that represent information such as the "program name," "broadcast date and time," and "program content" related to the tuned television program.

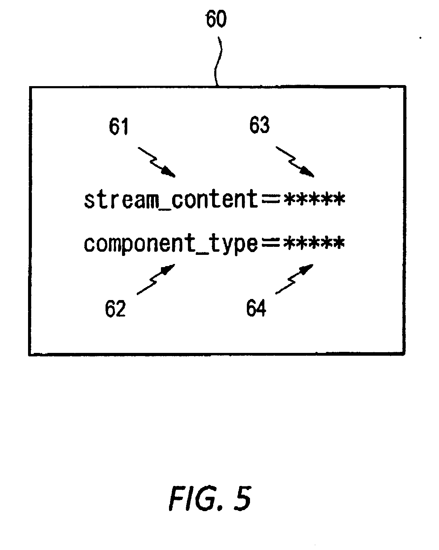

Also, descriptors 31 in the SDT 30 and/or descriptors 51 in the EIT 50 include two descriptors 60 illustrated in FIG. 5. The descriptors 60 include a descriptor 61 shown as "stream_content" and a descriptor 62 shown as "component_type." A specific numerical value 63 is described in the place shown by "*****" in the descriptor 61, and a specific numerical value 64 is described in the place shown by "*****" in the descriptor 62. The numerical value 63 added to the descriptor 61 and the numerical value 64 added to the descriptor 62 are used to confirm details about the video stream, audio stream, and data stream. Thus, the descriptor 61 and the descriptor 62 are paired, and a plurality of pairs is readied for each stream.

As shown in FIG. 6, when the details about the video stream, audio stream, and data stream are confirmed, a category 71 corresponding to the descriptor 61 and a category 72 corresponding to the descriptor 62 are referred to in the data table 70 by the controller 11. In particular, the category 71 having the same numerical value as the numerical value 63 added to the descriptor 61, and the category 72 having the same numerical value as the numerical value 64 added to the descriptor 62 are detected by the controller 11. Then, detailed information about each stream is confirmed by referring to a category 73 corresponding to the two detected categories (category 71 and category 72).

The video signal output component 20 combines the inputted video signal with OSD data outputted from the OSD processor 16, and outputs this to the display component 22. The light source 23 adjusts the brightness of the video displayed on the display component 22. The display component 22 includes an LCD (liquid crystal display), for example, and the light source 23 includes a CCFL (cold cathode fluorescent lamp). When the light source 23 is switched off (e.g., turned off), the video displayed on the display component 22 enters a non-display state, in which the video is not displayed on the display component 22. The audio signal output component 21 amplifies the inputted audio signal and outputs it to the speaker 24.

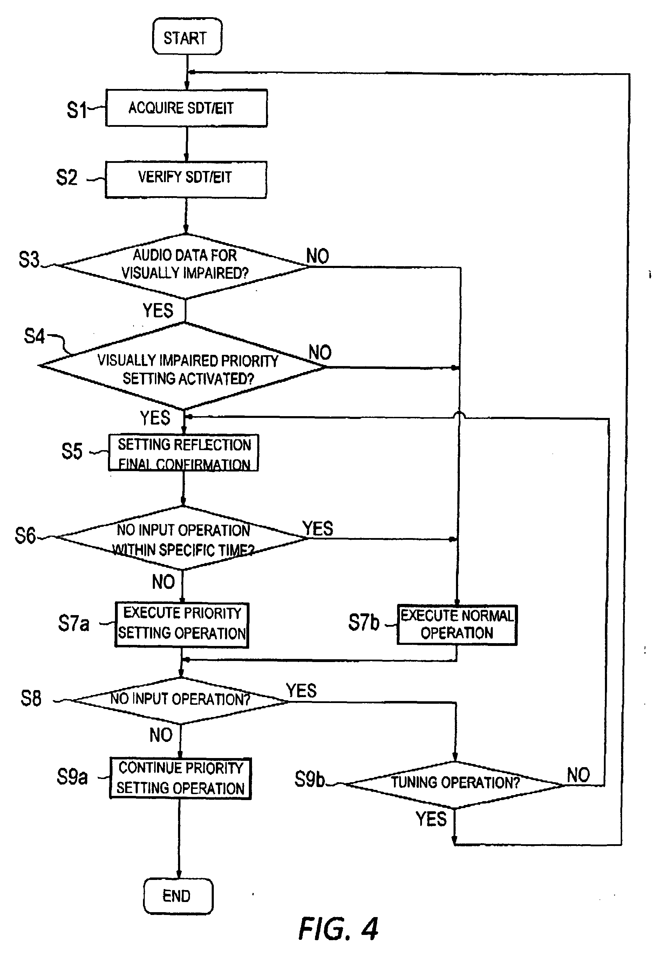

With the TV 100, when a visually impaired person views a television program, an operation shown in the flowchart of FIG. 4 is executed.

More specifically, in step S1, the SDT 30 (FIG. 2) and/or the EIT 50 (FIG. 3) are acquired from the data stream in the data stream processor 19 under the control of the controller 11 (FIG. 1). The acquired SDT 30 and/or EIT 50 are stored in the temporary memory 14 (FIG. 1).

In step S2, the controller 11 stars verifying the SDT 30 and/or EIT 50 stored in the temporary memory 14. More specifically, the descriptors 31 in the SDT 30 and the descriptors 51 in the EIT 50 are verified. Then, the numerical value 63 added to the descriptor 61 (FIG. 5) and the numerical value 64 added to the descriptor 62 (FIG. 5), given by the descriptors 31 and/or the descriptors 51, are confirmed.

In step S3, the controller 11 verifies whether or not audio data for the visually impaired is included in the audio stream for the tuned television program based on the verification result in step S2. If the result of this verification is that there is audio data for the visually impaired ("Yes" in step S3), then the flow proceeds to step S4. On the other hand, if there is no audio data for the visually impaired ("No" in step S3), then the flow proceeds to step S7b.

More specifically, the controller 11 refers to the category 71 corresponding to the descriptor 61 and the category 72 corresponding to the descriptor 62, and then the category 71 having the same numerical value as the numerical value 63 confirmed in step S2 and, similarly, the category 72 having the same numerical value as the numerical value 64 confirmed in step S2 are detected from the data table 70 stored in the temporary memory 14 as shown in FIG. 6. Then, the controller 11 refers to the category 73 corresponding to the two detected categories (the category 71 and the category 72). As a result, the controller 11 confirms whether or not there is a descriptor related to audio data for the visually impaired in the category 73. If there is such a descriptor, then the controller 11 recognizes that the audio stream includes audio data for the visually impaired.

For example, if the numerical value 63 added to the descriptor 61 is "0 x 02," and the numerical value 64 added to the descriptor 62 is "0 × 40", then the category 71 having the same numerical value as the numerical value 63 and the category 72 having the same numerical value as the numerical value 64 are the places highlighted in gray in FIG. 6. As shown in FIG. 6, the category 73 corresponding to the category 71 and the category 72 describes "MPEG-1 Layer 2 audio description for the visually impaired". Thus, the controller 11 recognizes that the audio stream of the tuned television program includes audio data for the visually impaired.

In step S4, the controller 11 verifies whether or not the function of "visually impaired viewer priority setting" is activated. The "visually impaired viewer priority setting" indicates that a visually impaired person is viewing a television program. If the result of this verification is that the setting is activated ("Yes" in step S4), then the flow proceeds to step S5. On the other hand, if the setting is inactivated ("No" in step S4), then the flow proceeds to step S7b.

The "visually impaired viewer priority setting" is preset by performing a specific operation with the control interface 12, which is done by someone other than the visually impaired person, such as a family member or the person who installs the TV 100. Furthermore, information related to the "visually impaired viewer priority setting" is stored in the memory 13 (or the temporary memory 14), for example. If the function of "visually impaired viewer priority setting" is activated, then this function is executed when a channel is changed, or when the TV 100 is started up (when the power is switched on). The control interface 12 and the memory 13 (or the temporary memory 14) here are examples of the preset component (or preset means).

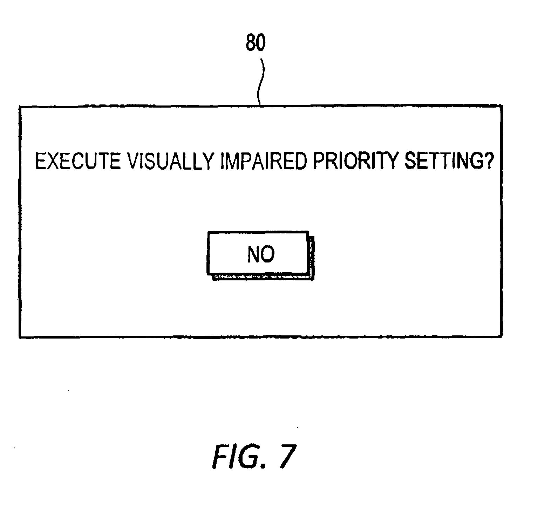

In step S5, the controller 11 executes final confirmation of whether or not the "visually impaired viewer priority setting" is reflected during viewing of a television program. This final confirmation is carried out by displaying the OSD 80 shown in FIG. 7 on the display component 22. The data of the OSD 80 is produced by the OSD processor 16 under the control of the controller 11. The OSD 80 here is an example of the notice information.

In step S6, the controller 11 verifies whether or not there has been an input operation (e.g., operation input) with the control interface 12 within a specific, preset length of time after the OSD 80 is displayed on the display component 22. Here, the specific, preset length of time is set to 3 minutes, 5 minutes, and so forth, for example. If the result of this verification is that there is no input operation ("No" in step S6), then the flow proceeds to step S7a. On the other hand, if there is an input operation ("Yes" in step S6), then the flow proceeds to step S7b. The input operation verified in step S6 means an operation in which "No" is selected on the OSD 80. If there is no input operation within the specific length of time, then the OSD 80 displayed on the display component 22 automatically goes away.

In step S7a, viewing of the television program begins with the "visually impaired viewer priority setting" being reflected, and in step S7b, viewing of the television program begins without the "visually impaired viewer priority setting" being reflected. More specifically, in step S7a, the audio signal output component 21 outputs normal audio (e.g., main audio) along with audio for the visually impaired (e.g., sub audio) to the speaker 24. The normal audio includes dialogue or sound of the video of the television program. The audio for the visually impaired includes audio commentary describing what is happening on the video of the television program for the visually impaired. Also, the controller 11 switches off (or turned off) the light source 23 so that the video displayed on the display component 22 enters the non-display state. Meanwhile, in step S7b, the television program is viewed in the normal state (or display state). In other words, the light source 23 is turned on so that the video is displayed on the display component 22 and only the normal audio is outputted from the speaker 24.

In step S8, the controller 11 verifies whether or not the control interface 12 has been operated during viewing of a television program. If the result of this verification is that there is no input operation with the control interface 12 ("No" in step S8), then the flow proceeds to step S9a. On the other hand, if there is an input operation with the control interface 12 ("Yes" in step S8), then the flow proceeds to step S9b. If the input operation is made with the control interface 12, then the controller 11 again turns on the light source 23 and displays the video on the display component 22.

In step S9a, viewing of the television program that reflects the "visually impaired priority setting" is continued. Then, the operation of this flowchart is ended by turning off the power to the TV 100, for example. Meanwhile, in step S9b, if the input operation performed in step S8 is a tuning operation of a channel ("Yes" in step S9b), then the flow returns to just before step S1. On the other hand, if the input operation performed in step S8 is not a tuning operation (such as if it is a volume adjustment) ("No" in step S9b), then the flow returns to just before step S5.

The TV 100 mainly includes the controller 11, the broadcast signal processor 15, the display component 22, the speaker 24, and the light source 23. The controller 11 controls the various components of the TV 100. The broadcast signal processor 15 receives the digital broadcast signal and performs specific signal processing. The display component 22 displays video based on the output from the broadcast signal processor 15. The speaker 24 outputs audio based on the output from the broadcast signal processor 15. The light source 23 is used for the display component 22. The controller 11 verifies whether or not the digital broadcast signal includes audio for the visually impaired. If the audio for the visually impaired is included, then the controller 11 outputs the audio for the visually impaired and the normal audio from the speaker 24, and switches off the light source 23 so that the video displayed on the display component is in the non-display state.

With the TV 100, when a visually impaired person views a television program or the like, the output of audio for the visually impaired is accompanied by the light source 23 being switched off, allowing the video displayed on the display component 22 to be put in the non-display state. This saves on power consumption.

More specifically, after the numerical value 63 added to the descriptor 61 and the numerical value 64 added to the descriptor 62 are confirmed from the descriptors 31 in the acquired SDT 30 and/or the descriptors 51 in the EIT 50, the controller 11 refers to the category 71 corresponding to the descriptor 61 and the category 72 corresponding to the descriptor 62 in the data table 70. Furthermore, the category 71 having the same numerical value as the numerical value 63 and the category 72 having the same numerical value as the numerical value 64 are detected by the controller 11. Moreover, the controller 11 refers to the category 73 corresponding to the detection result. If there is a description related to audio data for the visually impaired in the category 73, then the normal audio is outputted along with the audio for the visually impaired to the speaker 24, and the light source 23 is switched off so that the video displayed on the display component 22 enters the non-display state. Consequently, when a television program is viewed by a visually impaired person, that is, when there is no need to display video, the light source 23 is automatically switched off and the video displayed on the display component 22 can be shut off. As a result, this saves on power consumption.

Furthermore, the TV 100 further includes the control interface 12 and the memory 13 as a preset means. The preset means pre-selects that the light source 23 will be switched off and the video displayed on the display component 22 will be put in the non-display state when the digital broadcast signal includes audio for the visually impaired. If the digital broadcast signal includes audio for the visually impaired and the preset means has selected that the video will be put in the non-display state, then the light source 23 is switched off and the video displayed on the display component 22 is put in the non-displayed state. If the digital broadcast signal includes audio for the visually impaired and the preset means has not selected that the video will be put in the non-displayed state, then the light source 23 is switched on and the video is displayed on the display component22. Furthermore, if the digital broadcast signal does not include audio for the visually impaired, then the light source 23 is switched on and the video is displayed on the display component 22.

With the TV 100, since display or non-display of video can be selected as desired by the user, this makes the TV 100 more convenient for the user.

More specifically, if there is audio data for the visually impaired ("Yes" in step S3), and if the function of "visually impaired viewer priority setting," which assumes that a visually impaired person is viewing a television program, is activated ("Yes" in step S4), then the light source 23 is switched off and the video displayed on the display component 22 is shut off (step S7a). If there is audio data for the visually impaired ("Yes" in step S3), and the function of "visually impaired viewer priority setting" is inactivated ("No" in step S4), then the light source 23 is switched on and the video is displayed on the display component 22 (step S7b). Furthermore, if there is no audio data for the visually impaired ("No" in step S3), then the light source 23 is switched on and the video is displayed on the display component 22 (step S7b). Therefore, whether or not video is displayed can be selected according to the viewer, which makes the TV 100 more convenient to viewers.

Moreover, the TV 100 further includes the control interface 12 for operating the TV 100. The controller 11 displays the notice information notifying that the video displayed on the display component 22 will be put in the non-display state before the light source 23 is switched off and the state changes to the non-display state. If there is no specific operation of the control interface 12 within the specific length of time after the display of this notice information, then the state changes to the non-display state. On the other hand, if there is a specific operation of the control interface 12 within the specific length of time, then the state does not change to the non-display state.

With the TV 100, when a visually impaired person views together with someone with normal vision, if the specific operation is made with the control interface 12 within the specific length of time after the display of the notice information, then the display of video will be maintained, which makes the TV 100 more convenient for persons who are not visually impaired.

More specifically, the OSD 80 for final confirmation of whether or not the "visually impaired priority setting" is reflected is displayed on the display component 22 (step S5). If there is no input operation with the control interface 12 within the specific, preset length of time since this display of the OSD 80 ("No" in step S6), then the viewing of the television program that reflects the "visually impaired priority setting" is begun (step S7a). On the other hand, if there is an input operation with the control interface 12 within the specific, preset length of time since this display of the OSD 80 ("Yes" in step S6), then the viewing of the television program that does not reflect the "visually impaired viewer priority setting" is begun (step S7b). Consequently, if a visually impaired person views together with someone with normal vision, if a specific operation is made with the control interface 12 within the specific length of time after the display of the OSD 80, then the display of video will be maintained, which makes the TV 100 more convenient for persons who are not visually impaired.

With the TV 100, various embodiments other than the one given above are possible. For instance, in the above embodiment, the TV 100 is given as an example of a video device, but the application is not limited to this. For example, the video device can instead be a projector, a PC (personal computer), portable terminal, or other such video device.

Also, with the TV 100, the display component 22 includes the LCD and the light source 23 includes the CCFL. However, other displays and light sources compatible with the displays can be used instead as the display component 22 and the light source 23. Also, an ELP (electroluminescent panel) or PDP (plasma display panel) in which the display itself is made up of a light source can also be used.

Furthermore, in step S7b in FIG. 4, the video is displayed on the display component 22, and only the normal audio is outputted from the speaker 24. However, if there is audio for the visually impaired, then this audio for the visually impaired can also be outputted along with the normal audio to the speaker 24 in step S7b.

### GENERAL INTERPRETATION OF TERMS

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. The term "detect" as used herein to describe an operation or function carried out by a component, a section, a device or the like includes a component, a section, a device or the like that does not require physical detection, but rather includes determining, measuring, modeling, predicting or computing or the like to carry out the operation or function. The term "configured" as used herein to describe a component, section or part of a device includes hardware and/or software that is constructed and/or programmed to carry out the desired function.

While only a preferred embodiment has been chosen to illustrate the present invention, it will be apparent to those skilled in the art from this disclosure that various changes and modifications can be made herein without departing from the scope of the invention as defined in the appended claims. The functions of one element can be performed by two, and vice versa. Every feature which is unique from the prior art, alone or in combination with other features, also should be considered a separate description of further inventions by the applicant, including the structural and/or functional concepts embodied by such feature. Thus, the foregoing descriptions of the embodiment according to the present invention are provided for illustration only, and not for the purpose of limiting the invention as defined by the appended claims.

## Claims

1. A video device, having a priority setting for the visually impaired viewer, comprising:
a broadcast signal processor configured to receive a digital broadcast signal and process the digital broadcast signal;
a display component configured to display video based on the digital broadcast signal outputted from the broadcast signal processor, the display component having a light source;
a speaker configured to output main audio of the video based on the digital broadcast signal outputted from the broadcast signal processor; and
a controller configured to determine whether or not the digital broadcast signal includes sub audio for the visually impaired, the controller being further configured to output the sub audio for the visually impaired with the main audio of the video from the speaker and turn off the light source of the display component when the controller determines that the digital broadcast signal includes the sub audio for the visually impaired, when the device is preset to said priority setting.

2. The video device according to claim 1, further comprising
a preset component configured to preset said priority setting in which the controller turns off the light source of the display component when the controller determines that the digital broadcast signal includes the sub audio for the visually impaired,
the controller being configured to turn off the light source of the display component when the preset component presets said priority setting and the controller determines that the digital broadcast signal includes the sub audio for the visually impaired, and
the controller being configured to turn on the light source of the display component when the preset component does not preset said priority setting and the controller determines that the digital broadcast signal includes the sub audio for the visually impaired, or when the controller determines that the digital broadcast signal does not include the sub audio for the visually impaired.

3. The video device according to claim 1, further comprising
a control interface configured to input operation inputs,
the controller being configured to display notice information before the controller turns off the light source of the display component with the notice information notifying that the display component will be put into a non-display state,
the controller being configured to turn off the light source of the display component when the controller does not receive an operation input in response to the notice information from the control interface within a predetermined length of time after displaying the notice information, and
the controller being configured to turn on the light source of the display component when the controller receives the operation input in response to the notice information from the control interface within the predetermined length of time after displaying the notice information.

4. The video device according to claim 3, wherein
the controller is further configured to output the main audio of the video without the sub audio for the visually impaired from the speaker when the controller receives the operation input in response to the notice information from the control interface within the predetermined length of time after displaying the notice information.

5. The video device according to claim 3, wherein
the controller is further configured to determine whether or not the digital broadcast signal for a tuned channel includes the sub audio for the visually impaired when the controller receives an operation input for a tuning operation of the video device to the tuned channel.

6. The video device according to claim 5, wherein
the controller is further configured to turn on the light source of the display component and display the notice information after the controller turns off the light source of the display component when the controller receives an operation input for an operation of the video device other than the tuning operation of the video device.

7. The video device according to claim 2, further comprising
a control interface configured to input operation inputs,
the controller being configured to display notice information before the controller turns off the light source of the display component with the notice information notifying that the display component will be put into a non-display state,
the controller being configured to turn off the light source of the display component when the controller does not receive an operation input in response to the notice information from the control interface within a predetermined length of time after displaying the notice information, and
the controller being configured to turn on the light source of the display component when the controller receives the operation input in response to the notice information from the control interface within the predetermined length of time after displaying the notice information.

8. The video device according to claim 7, wherein
the controller is further configured to output the main audio of the video without the sub audio for the visually impaired from the speaker when the controller receives the operation input in response to the notice information from the control interface within the predetermined length of time after displaying the notice information.

9. The video device according to claim 7, wherein
the controller is further configured to determine whether or not the digital broadcast signal for a tuned channel includes the sub audio for the visually impaired when the controller receives an operation input for a tuning operation of the video device to the tuned channel.

10. The video device according to claim 9, wherein
the controller is further configured to turn on the light source of the display component and display the notice information after the controller turns off the light source of the display component when the controller receives an operation input for an operation of the video device other than the tuning operation of the video device.

11. A method for controlling a video device, the method comprising:
receiving a digital broadcast signal;
processing the digital broadcast signal;
displaying video based on the digital broadcast signal on a display component;
outputting main audio of the video based on the digital broadcast signal from a speaker;
determining whether or not the digital broadcast signal includes sub audio for the visually impaired; and
outputting the sub audio for the visually impaired with the main audio of the video from the speaker and turning off a light source of the display component upon determining that the digital broadcast signal includes the sub audio for the visually impaired.

## Patentansprüche

1. Videovorrichtung, die eine Prioritätseinstellung für den sehbehinderten Betrachter hat, enthaltend:
einen Rundsendesignalprozessor, der dazu eingerichtet ist, ein digitales Rundsendesignal zu empfangen und das digitale Rundsendesignal zu verarbeiten;
ein Anzeigebauteil, das dazu eingerichtet ist, Video auf der Basis des digitalen Rundsendesignals anzuzeigen, das von dem Rundsendesignalprozessor ausgegeben wird, wobei das Anzeigebauteil eine Lichtquelle hat;
einen Lautsprecher, der dazu eingerichtet ist, Hauptaudio des Videos auf der Basis des digitalen Rundsendesignals auszugeben, das von dem Rundsendesignalprozessor ausgegeben wird; und
eine Steuereinheit, die dazu eingerichtet ist zu ermitteln, ob das digitale Rundsendesignal Zusatzaudio für den Sehbehinderten enthält oder nicht, wobei die Steuereinheit weiterhin dazu eingerichtet ist, das Zusatzaudio für den Sehbehinderten mit dem Hauptaudio des Videos aus dem Lautsprecher auszugeben und die Lichtquelle des Anzeigebauteils abzuschalten, sofern die Steuereinheit ermittelt, dass das digitale Rundsendesignal das Zusatzaudio für den Sehbehinderten enthält, wenn die Vorrichtung auf die Prioritätseinstellung voreingestellt ist.

2. Videovorrichtung nach Anspruch 1, weiterhin enthaltend:
ein Voreinstellungsbauteil, das dazu eingerichtet ist, die Prioritätseinstellung voreinzustellen, bei der die Steuereinheit die Lichtquelle des Anzeigebauteils abschaltet, sofern die Steuereinheit ermittelt, dass das digitale Rundsendesignal das Zusatzaudio für den Sehbehinderten enthält,
wobei die Steuereinheit dazu eingerichtet ist, die Lichtquelle des Anzeigebauteils abzuschalten, wenn das Voreinstellungsbauteil die Prioritätseinstellung einstellt und die Steuereinheit ermittelt, dass das digitale Rundsendesignal das Zusatzaudio für den Sehbehinderten enthält, und
die Steuereinheit dazu eingerichtet ist, die Lichtquelle des Anzeigebauteils einzuschalten, wenn das Voreinstellungsbauteil die Prioritätseinstellung nicht einstellt und die Steuereinheit ermittelt, dass das digitale Rundsendesignal das Zusatzaudio für den Sehbehinderten enthält, oder wenn die Steuereinheit ermittelt, dass das digitale Rundsendesignal das Zusatzaudio für den Sehbehinderten nicht enthält.

3. Videovorrichtung nach Anspruch 1, weiterhin enthaltend:
eine Steuerschnittstelle, die dazu eingerichtet ist, Bedieneingaben einzugeben,
wobei die Steuereinheit dazu eingerichtet ist, Hinweisinformationen anzuzeigen, bevor die Steuereinheit die Lichtquelle des Anzeigebauteils abschaltet, wobei die Hinweisinformationen darüber Auskunft geben, dass das Anzeigebauteil in einen Nicht-Anzeigezustand versetzt wird,
die Steuereinheit dazu eingerichtet ist, die Lichtquelle des Anzeigebauteils abzuschalten, sofern die Steuereinheit keine Bedieneingabe in Erwiderung auf die Hinweisinformationen von der Steuerschnittstelle innerhalb einer vorbestimmten Zeitlänge empfängt, nachdem die Hinweisinformationen angezeigt wurden, und
die Steuereinheit dazu eingerichtet ist, die Lichtquelle des Anzeigebauteils einzuschalten, sofern die Steuereinheit die Bedieneingabe in Erwiderung auf die Hinweisinformationen von der Steuerschnittstelle innerhalb der vorbestimmten Zeitlänge empfängt, nachdem die Hinweisinformationen angezeigt wurden.

4. Videovorrichtung nach Anspruch 3, bei der die Steuereinheit weiterhin dazu eingerichtet ist, das Hauptaudio des Videos ohne das Zusatzaudio für den Sehbehinderten aus dem Lautsprecher auszugeben, wenn die Steuereinheit die Bedieneingabe in Erwiderung auf die Hinweisinformationen von der Steuerschnittstelle innerhalb der vorbestimmten Zeitlänge empfängt, nachdem die Hinweisinformationen angezeigt wurden.

5. Videovorrichtung nach Anspruch 3, bei der die Steuereinheit weiterhin dazu eingerichtet ist zu ermitteln, ob das digitale Rundsendesignal für einen abgestimmten Kanal das Zusatzaudio für den Sehbehinderten enthält oder nicht, sofern die Steuereinheit eine Bedieneingabe für eine Abstimmtätigkeit der Videovorrichtung auf den abgestimmten Kanal empfängt.

6. Videovorrichtung nach Anspruch 5, bei der die Steuereinheit weiterhin dazu eingerichtet ist, die Lichtquelle des Anzeigebauteils einzuschalten und die Hinweisinformationen anzuzeigen, nachdem die Steuereinheit die Lichtquelle des Anzeigebauteils abgeschaltet hat, wenn die Steuereinheit eine Bedieneingabe für eine Tätigkeit der Videovorrichtung empfängt, die sich von der Abstimmtätigkeit der Videovorrichtung unterscheidet.

7. Videovorrichtung nach Anspruch 2, weiterhin enthaltend:
eine Steuerschnittstelle, die dazu eingerichtet ist Betätigungseingaben einzugeben,
wobei die Steuereinheit dazu eingerichtet ist, Hinweisinformationen anzuzeigen, bevor die Steuereinheit die Lichtquelle des Anzeigebauteils abschaltet, wobei die Hinweisinformationen darüber Auskunft geben, dass das Anzeigebauteil in einen Nicht-Anzeigezustand versetzt wird,
die Steuereinheit dazu eingerichtet ist, die Lichtquelle des Anzeigebauteils abzuschalten, sofern die Steuereinheit keine Bedieneingabe in Erwiderung auf die Hinweisinformationen von der Steuerschnittstelle innerhalb einer vorbestimmten Zeitlänge empfängt, nachdem die Hinweisinformationen angezeigt wurden, und
die Steuereinheit dazu eingerichtet ist, die Lichtquelle des Anzeigebauteils einzuschalten, sofern die Steuereinheit die Bedieneingabe in Erwiderung auf die Hinweisinformationen von der Steuerschnittstelle innerhalb der vorbestimmten Zeitlänge empfängt, nachdem die Hinweisinformationen angezeigt wurden.

8. Videovorrichtung nach Anspruch 7, bei der die Steuereinheit weiterhin dazu eingerichtet ist, das Hauptaudio des Videos ohne das Zusatzaudio für den Sehbehinderten aus dem Lautsprecher auszugeben, wenn die Steuereinheit die Bedieneingabe in Erwiderung auf die Hinweisinformationen von der Steuerschnittstelle innerhalb der vorbestimmten Zeitlänge empfängt, nachdem die Hinweisinformationen angezeigt wurden.

9. Videovorrichtung nach Anspruch 7, bei der die Steuereinheit weiterhin dazu eingerichtet ist zu ermitteln, ob das digitale Rundsendesignal für einen abgestimmten Kanal das Zusatzaudio für den Sehbehinderten enthält oder nicht, sofern die Steuereinheit eine Bedieneingabe für eine Abstimmtätigkeit der Videovorrichtung auf den abgestimmten Kanal empfängt.

10. Videovorrichtung nach Anspruch 9, bei der die Steuereinheit weiterhin dazu eingerichtet ist, die Lichtquelle des Anzeigebauteils einzuschalten und die Hinweisinformationen anzuzeigen, nachdem die Steuereinheit die Lichtquelle des Anzeigebauteils abgeschaltet hat, wenn die Steuereinheit eine Bedieneingabe für eine Tätigkeit der Videovorrichtung empfängt, die sich von der Abstimmtätigkeit der Videovorrichtung unterscheidet.

11. Verfahren zum Steuern einer Videovorrichtung, wobei das Verfahren umfasst:
Empfangen eines digitalen Rundsendesignals;
Verarbeiten des digitalen Rundsendesignals;
Anzeigen von Video auf der Basis des digitalen Rundsendesignals auf einem Anzeigebauteil;
Ausgeben des Hauptaudios des Videos auf der Basis des digitalen Rundsendesignals aus einem Lautsprecher;
Ermitteln, ob das digitale Rundsendesignal Zusatzaudio für den Sehbehinderten enthält oder nicht; und
Ausgeben des Zusatzaudios für den Sehbehinderten mit dem Hauptaudio des Videos aus dem Lautsprecher und Abschalten einer Lichtquelle des Anzeigebauteils bei Ermittlung, dass das digitale Rundsendesignal das Zusatzaudio für den Sehbehinderten enthält.

## Revendications

1. Dispositif vidéo, possédant un paramétrage de priorité pour le spectateur malvoyant, comportant :
un processeur de signal de diffusion configuré pour recevoir un signal de diffusion numérique et traiter le signal de diffusion numérique ;
un composant d'affichage configuré pour afficher une vidéo en fonction du signal de diffusion numérique délivré depuis le processeur de signal de diffusion, le composant d'affichage possédant une source de lumière ;
un haut-parleur configuré pour délivrer une source audio principale de la vidéo en fonction du signal de diffusion numérique délivré depuis le processeur de signal de diffusion ; et
un contrôleur configuré pour déterminer si oui ou non le signal de diffusion numérique comprend une source audio secondaire pour le malvoyant, le contrôleur étant en outre configuré pour délivrer la source audio secondaire pour le malvoyant avec la source audio principale de la vidéo à partir du haut-parleur et couper la source de lumière du composant d'affichage lorsque le contrôleur détermine que le signal de diffusion numérique comprend la source audio secondaire pour le malvoyant, lorsque le dispositif est préréglé sur ledit paramétrage de priorité.

2. Dispositif vidéo selon la revendication 1, comportant en outre
un composant préréglé configuré pour prérégler ledit paramétrage de priorité, où le contrôleur coupe la source de lumière du composant d'affichage lorsque le contrôleur détermine que le signal de diffusion numérique comprend la source audio secondaire pour le malvoyant,
le contrôleur étant configuré pour couper la source de lumière du composant d'affichage lorsque le composant préréglé prérègle ledit paramétrage de priorité et le contrôleur détermine que le signal de diffusion numérique comprend une source audio secondaire pour le malvoyant, et
le contrôleur étant configuré pour allumer la source de lumière du composant d'affichage lorsque le composant préréglé ne prérègle pas ledit paramétrage de priorité et le contrôleur détermine que le signal de diffusion numérique comprend la source audio secondaire pour le malvoyant, ou lorsque le contrôleur détermine que le signal de diffusion numérique ne comprend pas la source audio secondaire pour le malvoyant.

3. Dispositif vidéo selon la revendication 1, comportant en outre
une interface de contrôle configurée pour entrer des entrées d'opération,
le contrôleur étant configuré pour afficher une information de notification avant que le contrôleur ne coupe la source de lumière du composant d'affichage avec l'information de notification notifiant que le composant d'affichage va être placé dans un état de non affichage,
le contrôleur étant configuré pour couper la source de lumière du composant d'affichage lorsque le contrôleur ne reçoit pas d'entrée d'opération en réponse à l'information de notification provenant de l'interface de contrôle pendant une période de temps prédéterminée après l'affichage de l'information de notification, et
le contrôleur étant configuré pour allumer la source de lumière du composant d'affichage lorsque le contrôleur reçoit l'entrée d'opération en réponse à l'information de notification provenant de l'interface de contrôle pendant la durée de temps prédéterminée après l'affichage de l'information de notification.

4. Dispositif vidéo selon la revendication 3, dans lequel
le contrôleur est en outre configuré pour délivrer la source audio principale de la vidéo sans la source audio secondaire pour le malvoyant à partir du haut-parleur lorsque le contrôleur reçoit l'entrée d'opération en réponse à l'information de notification provenant de l'interface de contrôle pendant la durée de temps prédéterminée après l'affichage de l'information de notification.

5. Dispositif vidéo selon la revendication 3, dans lequel
le contrôleur est en outre configuré pour déterminer si oui ou non le signal de diffusion numérique pour un canal accordé comprend la source audio secondaire pour le malvoyant lorsque le contrôleur reçoit une entrée d'opération pour une opération d'accord du dispositif vidéo sur le canal accordé.

6. Dispositif vidéo selon la revendication 5, dans lequel
le contrôleur est en outre configuré pour allumer la source de lumière du composant d'affichage et afficher l'information de notification après que le contrôleur a coupé la source de lumière du composant d'affichage lorsque le contrôleur reçoit une entrée d'opération pour une opération du dispositif vidéo autre que l'opération d'accord du dispositif vidéo.

7. Dispositif vidéo selon la revendication 2, comportant en outre
une interface de contrôle configurée pour entrer des entrées d'opération,
le contrôleur étant configuré pour afficher une information de notification avant que le contrôleur ne coupe la source de lumière du composant d'affichage avec l'information de notification notifiant que le composant d'affichage va être placé dans un état de non affichage,
le contrôleur étant configuré pour couper la source de lumière du composant d'affichage lorsque le contrôleur ne reçoit pas d'entrée d'opération en réponse à l'information de notification provenant de l'interface de contrôle pendant une durée de temps prédéterminée après l'affichage de l'information de notification, et
le contrôleur étant configuré pour allumer la source de lumière du composant d'affichage lorsque le contrôleur reçoit l'entrée d'opération en réponse à l'information d'une notification provenant de l'interface de contrôle pendant la durée de temps prédéterminée après l'affichage de l'information de notification.

8. Dispositif vidéo selon la revendication 7, dans lequel
le contrôleur est en outre configuré pour délivrer la source audio principale de la vidéo sans la source audio secondaire pour le malvoyant à partir du haut-parleur lorsque le contrôleur reçoit l'entrée d'opération en réponse à l'information de notification provenant de l'interface de contrôle pendant la durée de temps prédéterminée après l'affichage de l'information de notification.

9. Dispositif vidéo selon la revendication 7, dans lequel
le contrôleur est en outre configuré pour déterminer si oui ou non le signal de diffusion numérique pour un canal accordé comprend la source audio secondaire pour le malvoyant lorsque le contrôleur reçoit une entrée d'opération pour une opération d'accord du dispositif d'affichage sur le canal accordé.

10. Dispositif vidéo selon la revendication 9, dans lequel
le contrôleur est en outre configuré pour allumer la source de lumière du composant d'affichage et afficher l'information de notification après que le contrôleur a coupé la source de lumière du composant d'affichage lorsque le contrôleur reçoit une entrée d'opération pour une opération du dispositif vidéo autre que l'opération d'accord du dispositif vidéo.

11. Procédé de contrôle d'un dispositif vidéo, le procédé comportant :
la réception d'un signal de diffusion numérique ;
le traitement du signal de diffusion numérique ;
l'affichage d'une vidéo en fonction du signal de diffusion numérique sur le composant d'affichage ;
la délivrance de la source audio principale de la vidéo en fonction du signal de diffusion numérique à partir d'un haut-parleur ;
la détermination du fait que le signal de diffusion numérique comprend ou non la source audio secondaire pour le malvoyant ; et
la délivrance de la source audio secondaire pour le malvoyant avec la source audio principale de la vidéo depuis le haut-parleur et la coupure d'une source de lumière du composant d'affichage lors de la détermination que le signal de diffusion numérique comprend la source audio secondaire pour le malvoyant.
